# EUROPÄISCHE PATENTSCHRIFT

(11) **EP 2 627 531 B1**
(45) Veröffentlichungstag und Bekanntmachung des Hinweises auf die Patenterteilung: **27.08.2014**
(21) Anmeldenummer: 11764112.6
(22) Anmeldetag: 30.09.2011
(51) Int. Cl.: B60W 50/14, B65H 75/02, H02G 11/02, B60L 11/18, B65H 75/42

(54) **VORRICHTUNG ZUM VERBINDEN EINES FAHRZEUGS MIT EINER STECKDOSE**
DEVICE FOR CONNECTING A VEHICLE TO A SOCKET
DISPOSITIF POUR CONNECTER UN VÉHICULE À UNE PRISE FEMELLE

(30) Priorität: 13.10.2010 DE 102010048385
(43) Veröffentlichungstag der Anmeldung: 21.08.2013
(73) Patentinhaber: Audi AG, 85045 Ingolstadt (DE)
(72) Erfinder: ENNING, Norbert, 85095 Denkendorf (DE); KORTE, Michael, 85049 Ingolstadt (DE); MICHAEL, Jörg, 85055 Ingolstadt (DE)
(74) Vertreter: Herbst, Matthias Heinz
(86) Internationale Anmeldenummer: PCT/EP2011/004885
(87) Internationale Veröffentlichungsnummer: WO 2012/048805

(56) Entgegenhaltungen:
- EP-A1- 0 648 634
- DE-A1-102007 042 610
- US-A- 5 445 252

## Beschreibung

Die Erfindung betrifft eine Vorrichtung zum Verbinden eines mit elektrischem Strom betriebenen Fahrzeugs mit einer Steckdose eines Niederspannungs-Wechselstromnetzes nach der im Oberbegriff von Anspruch 1 näher definierten Art.

Aufgrund des verhältnismäßig hohen CO₂-Ausstoßes von üblichen, nach den Diesel-oder Otto-Prinzip arbeitenden Brennkraftmaschinen sowie der knapper werdenden Erdölvorräte ist in jüngster Zeit ein Trend zu Hybrid- und zu ausschließlich mittels elektrischem Strom angetriebenen Fahrzeugen zu erkennen. Solche als Elektrofahr-zeuge bezeichnete Kraftfahrzeuge weisen einen Elektromotor und eine den Elektromotor mit elektrischem Strom versorgende, wiederaufladbare Batterie auf, die auf verschiedene Arten aufgeladen werden kann. Zum Einen besteht die Möglichkeit, die Elektrofahrzeuge an sogenannten Stromtankstellen mittels einer Schnellladung mit Gleichstrom aufzuladen, wozu aufgrund der hohen Stromstärken Ladekabel mit sehr großem Durchmesser eingesetzt werden müssen. Eine andere Möglichkeit zur Aufladung dieser Elektrofahrzeuge besteht darin, diese an übliche Steckdosen eines Niederspannungs-Wechselstromnetzes anzuschließen, wie sie in jedem Haushalt, jedoch auch in vielen Garagen oder Carports vorzufinden sind. Zwar dauert eine Aufladung der Batterie an solchen "normalen" Steckdosen erheblich länger als die oben genannte Schnellaufladung, wenn das Fahrzeug jedoch über Nacht in einer Garage oder einem Carport geparkt wird, ist die Standzeit üblicherweise ausreichend, um die Batterie vollständig über das Niederspannungs-Wechselstromnetz zu laden.

Eine Möglichkeit, ein elektromotorisch betriebenes Fahrzeug mit einer Steckdose zu verbinden, ist in der EP 0 537 065 B1 beschrieben. Dabei ist ein Ladeanschluss in einem Gehäuse befestigt, welches beweglich auf dem Fahrgestell des Kraftfahrzeugs angebracht ist. Das Gehäuse kann durch das hintere Nummernschild des Kraftfahrzeugs verschlossen werden.

Nachteilig bei dieser Lösung ist jedoch insbesondere die Tatsache, dass zum Verbinden des Ladeanschlusses mit einer Steckdose ein zusätzliches Ladekabel mitgeführt werden muss, für welches innerhalb des Kraftfahrzeugs ein zusätzlicher Raum zur Verfügung gestellt werden muss. Ein weiterer Nachteil dieser bekannten Lösung besteht in der verhältnismäßig schwer zugänglichen Anordnung des Ladeanschlusses im Bereich des hinteren Nummernschilds, insbesondere da sich in diesem Bereich aus Sicherheitsgründen ein Stoßfänger befinden muss, dessen Konstruktion durch das Vorhandensein des Ladeanschlusses zusätzlich erschwert wird.

Eine gattungsgemäße Vorrichtung ist aus der gattungsbildenden US 5,445,252 oder der EP 0 648 634 B1 bekannt.

Die DE 10 2007 042 610 A1 beschreibt eine Frontscheibenverkleidung eines Kraftfahrzeugs mit Elektroantrieb. Dabei ist unter einem Deckel ein Elektroanschluss vorgesehen.

Es ist Aufgabe der vorliegenden Erfindung, eine Vorrichtung zum Verbinden eines mit elektrischem Strom betriebenen Fahrzeugs mit einer Steckdose zu schaffen, welche eine für den Benutzer des Fahrzeugs sehr einfach zu handhabende und zugleich einen Schutz für das Ladekabel bietende Lösung darstellt.

Erfindungsgemäß wird diese Aufgabe durch die in Anspruch 1 genannten Merkmale gelöst.

Durch die Unterbringung des Ladekabels und des Steckers unterhalb des der Wind-schutzscheibe zugeordneten Bereichs der Frontklappe des Fahrzeugs sind das Ladekabel und der Stecker gegen Verschmutzung geschützt und können dennoch sehr einfach zum Verbinden des Fahrzeugs mit der Steckdose entnommen werden. Die Handhabung der erfindungsgemäßen Vorrichtung ist somit sehr einfach und erlaubt ein schnelles Verbinden des Fahrzeugs mit dem Stromnetz.

Des weiteren ist das Ladekabel erfindungsgemäß zumindest mittelbar fest mit dem Fahrzeug verbunden, wodurch es stets mit dem Fahrzeug mitgeführt wird und nicht verloren gehen kann, so dass die Batterie des Fahrzeugs, die Verfügbarkeit einer entsprechenden Steckdose vorausgesetzt, stets aufgeladen werden kann.

Durch den erfindungsgemäßen Mechanismus, der beim Öffnen der Klappe eine Be-wegung des Steckers um einen gewissen Weg aus dem Hohlraum heraus bewirkt, ergibt sich ein einfacheres Entnehmen des Steckers und damit eine Komfortverbesserung.

Ein Schutz des Ladekabels und des Steckers vor Verschmutzung oder Beschädigung durch Fremdeinwirkung ergibt sich dadurch, dass der Hohlraum mittels einer Klappe verschließbar ist.

Eine alternative Lösung der Aufgabe ist in Anspruch 3 angegeben.

Der Mechanismus, der beim Einlegen des Steckers in den Hohlraum ein Schließen der Klappe bewirkt, stellt ebenfalls einen Komfortgewinn für den Nutzer der erfindungsgemäßen Vorrichtung dar.

Der Schutz des Ladekabels kann noch verstärkt werden, wenn die Klappe verriegelbar ist.

Wenn in einer weiteren vorteilhaften Ausführungsform der Erfindung die Klappe wenigstens eine Dichtungseinrichtung aufweist, so sind das Ladekabel und der Stecker sehr gut gegen das Eindringen von Wasser geschützt.

Um eine geeignete und angemessene Unterbringung des Ladekabels innerhalb des Kraftfahrzeugs zu gewährleisten und gleichzeitig die ständige Entnehmbarkeit des Ladekabels aus seinem Lagerplatz unterhalb der Frontklappe zu gewährleisten, kann in einer vorteilhaften Ausgestaltung der Erfindung vorgesehen sein, dass das Ladekabel an einer zumindest mittelbar mit dem Kraftfahrzeug verbundenen Aufwickeleinrichtung angebracht und mittels der Aufwickeleinrichtung zu einer Rolle aufwickelbar ist.

Alternativ könnte auch vorgesehen sein, dass das Ladekabel in einem rohrförmigen Aufnahmeelement angeordnet ist. Durch eine solche Unterbringung des Ladekabels in dem rohrförmigen Aufnahmeelement kann das Ladekabel in einem gut zugängli-chen und dennoch gegen Verschmutzung geschützten Bereich untergebracht wer-den. Ein weiterer Vorteil eines solchen rohrförmigen Aufnahmeelements besteht da-rin, dass es an sehr vielen unterschiedlichen Stellen des Fahrzeugs untergebracht werden kann und somit das Design des Fahrzeugs nicht stört. Des weiteren ermöglicht diese Unterbringung auch eine sehr einfache und schnelle Handhabung.

Wenn dabei das Ladekabel als Spiralkabel ausgebildet ist, kann dieses sehr einfach aus seinem Lagerzustand innerhalb des Fahrzeugs in seinen Gebrauchszustand, in dem der Stecker in der Steckdose eingesteckt ist, und umgekehrt, von seinem Gebrauchszustand in seinen Lagerzustand, gebracht werden. Ein besonderer Vorteil besteht dabei darin, dass ein derartiges Spiralkabel durch seine ihm innewohnende Elastizität zwar ohne Kraftaufwendung oder spezielle Bewegungen seitens der Bedienperson in seinen Lagerzustand gebracht werden kann, dass äußere Einflüsse, wie Nässe, Schmutz oder dergleichen, jedoch nicht zu Einschränkungen bei der Verwendung des Ladekabels führen.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: ein mit einer erfindungsgemäßen Vorrichtung ausgestattetes Fahrzeug;
- Fig. 2: einen Schnitt durch eine erste Ausführungsform der erfindungsgemäßen Vorrichtung;
- Fig. 3: einen Schnitt durch eine zweite Ausführungsform der erfindungsgemäßen Vorrichtung; und
- Fig. 4: einen Schnitt durch eine dritte Ausführungsform der erfindungsgemäßen Vorrichtung.

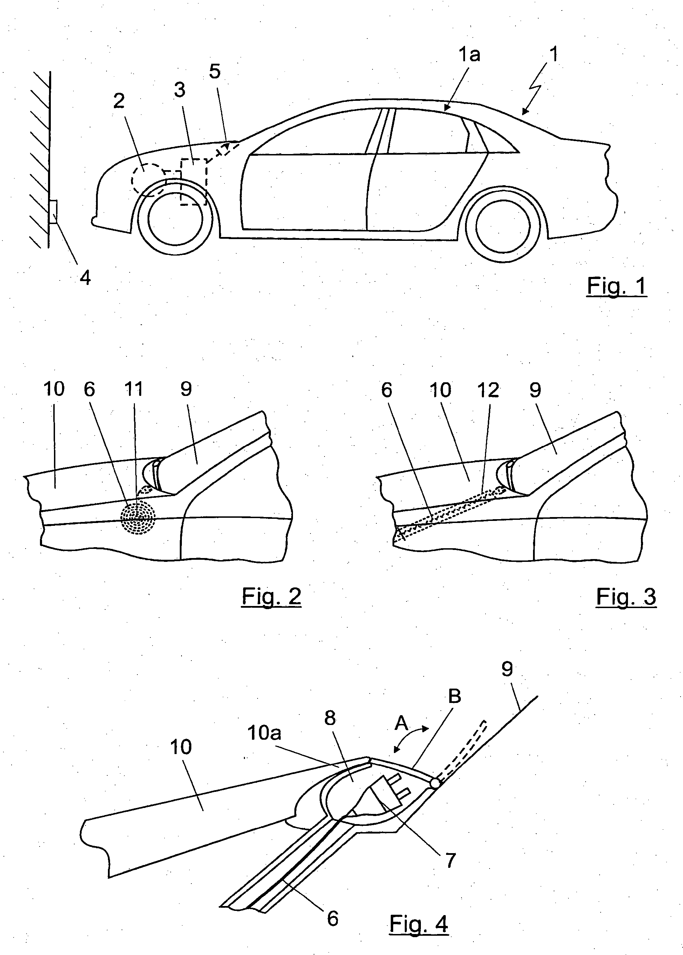

Fig. 1 zeigt ein Fahrzeug 1 mit einer Karosserie 1a, welches mit elektrischem Strom betrieben wird. Hierzu weist das Fahrzeug 1 einen sehr schematisch angedeuteten Elektromotor 2 und eine wiederaufladbare Batterie 3 auf, die zur Versorgung des Elektromotors 2 mit elektrischem Strom dient. Um die Batterie 3 aufzuladen, kann dieselbe mit einer Steckdose 4 eines nicht dargestellten Niederspannungs-Wechselstromnetzes verbunden werden. Bei der Steckdose 4 handelt es sich um eine Steckdose, wie sie in dem jeweiligen Land, in welches das Fahrzeug 1 ausgeliefert wird, in Haushalten oder öffentlichen Gebäuden eingesetzt wird. In den meisten Staaten hat das Niederspannungs-Wechselstromnetz eine Spannung von 230 V, wenn ein Einphasenwechselstrom zum Einsatz kommt. In einigen anderen Staaten, beispielsweise in den USA, Kanada, Mexiko und einigen nördlichen Staaten Südamerikas, beträgt der Nennwert der Netzwechselspannung 120V. In der Bundesrepublik Deutschland ist die Steckdose 4 beispielsweise als Schutzkontakt-Steckdose oder Schuko-Steckdose ausgebildet. Zum Verbinden des Fahrzeugs 1 mit der Steckdose 4 dient eine Vorrichtung 5, die ein Ladekabel 6 aufweist, welches wiederum einen zu der Steckdose 4 passenden Stecker 7 aufweist. Der Stecker 7 kann also, abhängig von dem Land, für welches das Fahrzeug 1 vorgesehen ist, unterschiedlich ausgeführt sein. Selbstverständlich ist auch die Verwendung von Adaptern denkbar.

Gemäß der in Fig. 2 dargestellten Ausführungsform der Vorrichtung 5 ist das Ladekabel 6 mit dem Stecker 7 in einem in der vergrößerten Darstellung gemäß Fig. 4 gut zu erkennenden Hohlraum 8 unterhalb eines einer Windschutzscheibe 9 des Fahrzeugs 1 zugerichteten Bereichs 10a einer Frontklappe 10 des Fahrzeugs 1 angeordnet. Mit anderen Worten, der Stecker 7 mit dem sich daran anschließenden Ladeka-bel 6 ist in einem Absatz zwischen der Prontklappe 10 und der Windschutzscheibe 9 des Fahrzeugs 1 angeordnet.

Bei der in Fig. 2 dargestellten Ausführungsform ist das Ladekabel 6 an einer zumindest mittelbar mit dem Fahrzeug 1 verbundenen Aufwickeleinrichtung 11 angebracht und kann mittels der Aufwickeleinrichtung 11 zu einer Rolle aufgewickelt werden. Die Aufwickeleinrichtung 11 kann so ausgeführt sein, dass nach einem leichten Ziehen an dem Ladekabel 6 in der Entnahmerichtung und anschließendem Zurücknehmen der Zugkraft das Ladekabel 6 selbsttätig aufgewickelt wird. Selbstverständlich kann die Aufwickeleinrichtung 11 auch einen Antriebsmotor oder dergleichen aufweisen.

Gemäß der in Fig. 3 dargestellten Ausführungsform ist das Ladekabel 6 in einem rohrförmigen Aufnahmeelement 12 angeordnet, wobei das Ladekabel 6 vorzugsweise als Spiralkabel ausgebildet ist. Ein solches Spiralkabel kann von der in Fig. 3 zu erkennenden, relativ geringen Länge durch entsprechendes Ziehen auf eine erheblich vergrößerte Länge gebracht werden. Dadurch können mit dem Ladekabel 6 auch größere Entfernungen bis zu der Steckdose 4 überwunden werden, wobei das Ladekabel 6 dennoch nur einen geringen Platzbedarf innerhalb des Fahrzeugs 1 erfordert.

Beiden Ausführungsformen gemäß der Figuren 2 und 3 ist gemeinsam, dass das Ladekabel 6 über die Aufwickeleinrichtung 11 oder das rohrförmige Aufnahmeele-ment 12 zumindest mittelbar fest mit dem Fahrzeug 1 verbunden ist. Im Falle des rohrförmigen Aufnahmeelements 12 kann eine solche Anbindung des Ladekabels 6 an das Fahrzeug 1 dadurch erfolgen, dass das rohrförmige Aufnahmeelement 12 starr mit dem Fahrzeug 1 verbunden ist, und das Ladekabel 6 an seinem dem Stecker 7 gegenüberliegenden Ende fest mit dem rohrförmigen Aufnahmeelement 12 verbunden ist.

Wie aus der detaillierteren Darstellung von Fig. 4 hervorgeht, kann die Vorrichtung 5 eine Klappe 13 aufweisen, mittels welcher der Hohlraum 8 verschließbar ist. Die Klappe 13 kann gemäß dem Pfeil "A" zwischen einer geschlossenen und einer mittels der gestrichelten Linie dargestellten geöffneten Position verstellt werden. In ihrer geschlossenen Stellung kann die Klappe 13 mittels einer nicht näher dargestellten Einrichtung verriegelt werden.

Des weiteren weist die Klappe 13 eine nicht dargestellte Dichtungseinrichtung auf, welche ein Eindringen von Wasser, Schmutz und dergleichen in den Hohlraum 8 verhindert. Eine derartige Dichtungseinrichtung verläuft vorzugsweise um die gesamte Klappe 13. Falls dennoch Wasser in den Hohlraum 8 eindringt, beispielsweise wenn die Klappe 13 nicht geschlossen wurde, kann der Hohlraum 8 eine nicht dargestellte Wasserablauföffnung aufweisen. Im Falle des Vorhandenseins des rohrförmigen Aufnahmeelements 12 kann sich diese Wasserablauföffnung an der Unterseite derselben befinden.

Um ein sicheres Schließen der Klappe 13 zu gewährleisten, kann die Klappe 13 in nicht dargestellter Weise mit einem Mechanismus versehen sein, der beim Einlegen des Steckers 7 in den Hohlraum 8 ein Schließen der Klappe 13 bewirkt. Beispielsweise kann dies dadurch gelöst werden, dass der Stecker 7 in eine nicht dargestellte Führung der Klappe 13 eingeführt werden muss, so dass beim weiteren Einführen des Steckers 7 in den Hohlraum 8 die Klappe 13 selbsttätig in ihre Geschlossenstellung gebracht wird.

Des weiteren kann, um ein einfacheres Entnehmen des Steckers 7 zu gewährleisten, die Klappe 13 einen Mechanismus aufweisen, der beim Öffnen der Klappe 13 eine Bewegung des Steckers 7 um einen gewissen Weg aus dem Hohlraum 8 heraus bewirkt. Auch dieser Mechanismus kann durch eine Anbindung des Steckers 7 an der Klappe 13 hergestellt werden. Diese beiden Mechanismen können auch mitei-nander gekoppelt sein, um dem Benutzer der Vorrichtung 5 einen größtmöglichen Komfort zu bieten.

## Patentansprüche

1. Vorrichtung zum Verbinden eines mit elektrischem Strom betriebenen Fahr-zeugs mit einer Steckdose eines Niederspannungs-Wechselstromnetzes, mit einem Ladekabel, welches einen zu der Steckdose passenden Stecker aufweist und welches zumindest mittelbar fest mit dem Fahrzeug verbunden ist,
**dadurch gekennzeichnet, dass**
das Ladekabel (6) mit dem Stecker (7) in einem mittels einer Klappe (13) ver-schließbaren Hohlraum (8) unterhalb eines einer Windschutzscheibe (9) des Fahrzeugs (1) zugerichteten Bereichs (10a) einer Frontklappe (10) des Fahrzeugs (1) angeordnet ist, und dass die Klappe (13) einen Mechanismus aufweist, der beim Öffnen der Klappe (13) eine Bewegung des Steckers (7) um einen gewissen Weg aus dem Hohlraum (8) heraus bewirkt.

2. Vorrichtung nach Anspruch 1,
**dadurch gekennzeichnet, dass**
die Klappe (13) einen Mechanismus aufweist, der beim Einlegen des Steckers (7) in den Hohlraum (8) ein Schließen der Klappe (13) bewirkt.

3. Vorrichtung zum Verbinden eines mit elektrischem Strom betriebenen Fahrzeugs mit einer Steckdose eines Niederspannungs-Wechselstromnetzes, mit einem Ladekabel, welches einen zu der Steckdose passenden Stecker aufweist und welches zumindest mittelbar fest mit dem Fahrzeug verbunden ist,
**dadurch gekennzeichnet, dass**
das Ladekabel (6) mit dem Stecker (7) in einem mittels einer Klappe (13) verschließbaren Hohlraum (8) unterhalb eines einer Windschutzscheibe (9) des Fahrzeugs (1) zugerichteten Bereichs (10a) einer Frontklappe (10) des Fahrzeugs (1) angeordnet ist, und dass die Klappe (13) einen Mechanismus auf-weist, der beim Einlegen des Steckers (7) in den Hohlraum (8) ein Schließen der Klappe (13) bewirkt.

4. Vorrichtung nach Anspruch 3,
**dadurch gekennzeichnet, dass**
die Klappe (13) einen Mechanismus aufweist, der beim Öffnen der Klappe (13) eine Bewegung des Steckers (7) um einen gewissen Weg aus dem Hohlraum (8) heraus bewirkt.

5. Vorrichtung nach einem der Ansprüche 1 bis 4,
**dadurch gekennzeichnet, dass**
die Klappe (13) verriegelbar ist.

6. Vorrichtung nach einem der Ansprüche 1 bis 5,
**dadurch gekennzeichnet, dass**
die Klappe (13) wenigstens eine Dichtungseinrichtung aufweist.

7. Vorrichtung nach einem der Ansprüche 1 bis 6,
**dadurch gekennzeichnet, dass**
der Hohlraum (8) eine Wasserablauföffnung aufweist.

8. Vorrichtung nach einem der Ansprüche 1 bis 7,
**dadurch gekennzeichnet, dass**
das Ladekabel (6) an einer zumindest mittelbar mit dem Fahrzeug (1) verbundenen Aufwickeleinrichtung (11) angebracht und mittels der Aufwickeleinrichtung (11) zu einer Rolle aufwickelbar ist.

9. Vorrichtung nach einem der Ansprüche 1 bis 8,
**dadurch gekennzeichnet, dass**
das Ladekabel (6) in einem rohrförmigen Aufnahmeelement (12) angeordnet und als Spiralkabel ausgebildet ist.

## Claims

1. Device for connecting a vehicle which is operated by electric current to a socket of a low-voltage AC power grid by means of a charging cable, which has a plug which fits the socket and which is at least indirectly rigidly connected to the vehicle, **characterised in that** the charging cable (6) comprising the plug (7) is arranged in a cavity (8), which can be closed by a lid (13), below a region (10a) of a bonnet (10) of the vehicle (1), said region being oriented towards a windscreen (9) of the vehicle (1), and **in that** the lid (13) comprises a mechanism which causes the plug (7) to move out of the cavity (8) by a defined distance when the lid (13) is opened.

2. Device according to claim 1, **characterised in that** the lid (13) comprises a mechanism which causes the lid (13) to close when the plug (7) is inserted into the cavity (8).

3. Device for connecting a vehicle which is operated by electric current to a socket of a low-voltage AC power grid by means of a charging cable, which has a plug which fits the socket and which is at least indirectly rigidly connected to the vehicle, **characterised in that** the charging cable (6) comprising the plug (7) is arranged in a cavity (8), which can be closed by a lid (13), below a region (10a) of a bonnet (10) of the vehicle (1), said region being oriented towards a windscreen (9) of the vehicle (1), and **in that** the lid (13) comprises a mechanism which causes the lid (13) to close when the plug (7) is inserted into the cavity (8).

4. Device according to claim 3, **characterised in that** the lid (13) comprises a mechanism which causes the plug (7) to move out of the cavity (8) by a defined distance when the lid (13) is opened.

5. Device according to any of claims 1 to 4, **characterised in that** the lid (13) can be locked.

6. Device according to any of claims 1 to 5, **characterised in that** the lid (13) comprises at least one sealing device.

7. Device according to any of claims 1 to 6, **characterised in that** the cavity (8) has a drain louver.

8. Device according to any of claims 1 to 7, **characterised in that** the charging cable (6) is attached to a winding device (11) which is at least indirectly connected to the vehicle (1), and can be wound into a coil by the winding device (11).

9. Device according to any of claims 1 to 8, **characterised in that** the charging cable (6) is arranged in a tubular receiving element (12) and is constructed as a spiral cable.

## Revendications

1. Dispositif pour connecter un véhicule à commande par courant électrique à une prise d'un réseau basse tension à courant alternatif, comprenant un câble de charge avec une fiche mâle s'adaptant à la prise, et relié, tout au moins indirectement, de façon fixe au véhicule,
**caractérisé en ce que**
le câble de charge (6) avec la fiche mâle (7) est disposé dans une cavité verrouillable (8) au-dessous d'une zone (10a) d'un volet frontal (10) du véhicule (1), orientée vers un pare-brise (9) du véhicule (1), et **en ce que** le volet (13) présente un mécanisme qui actionne, lors de l'ouverture du volet (13), un mouvement de la fiche mâle (7) sur une certaine distance au dehors de la cavité (8).

2. Dispositif selon la revendication 1,
**caractérisé en ce que**
le volet (13) présente un mécanisme qui actionne une fermeture du volet (13) lors de l'insertion de la fiche mâle (7) dans la cavité (8).

3. Dispositif pour connecter un véhicule à commande par courant électrique à une prise d'un réseau basse tension à courant alternatif, comprenant un câble de charge avec une fiche mâle s'adaptant à la prise et relié, tout au moins indirectement, de façon fixe au véhicule,
**caractérisé en ce que**
le câble de charge (6) avec la fiche mâle (7) est disposé dans une cavité verrouillable (8) au-dessous d'une zone (10a) d'un volet frontal (10) du véhicule (1), orientée vers un pare-brise (9) du véhicule (1), et **en ce que** le volet (13) présente un mécanisme qui actionne une fermeture du volet (13) lors de l'insertion de la fiche mâle (7) dans la cavité (8).

4. Dispositif selon la revendication 3,
**caractérisé en ce que**
le volet (13) présente un mécanisme qui actionne, lors de l'ouverture du volet (13), un mouvement de la fiche mâle (7) sur une certaine distance au dehors de la cavité (8).

5. Dispositif selon l'une des revendications 1 à 4,
**caractérisé en ce que**
le volet (13) est verrouillable.

6. Dispositif selon l'une des revendications 1 à 5,
**caractérisé en ce que**
le volet (13) présente au moins un dispositif d'étanchéité.

7. Dispositif selon l'une des revendications 1 à 6,
**caractérisé en ce que**
la cavité (8) présente une ouverture d'écoulement de l'eau.

8. Dispositif selon l'une des revendications 1 à 7,
**caractérisé en ce que**
le câble de charge (6) est disposé sur un dispositif d'enroulement (11) relié tout au moins indirectement au véhicule (1), et peut être enroulé sur une bobine au moyen du dispositif d'enroulement (11).

9. Dispositif selon l'une des revendications 1 à 8,
**caractérisé en ce que**
le câble de charge (6) est disposé dans un élément récepteur en forme de tube (12) et est formé comme un câble spiralé.
